# EUROPEAN PATENT APPLICATION

(11) **EP 0 618 038 A1**
(43) Date of publication of application: **05.10.1994**
(21) Application number: 94301174.2
(22) Date of filing: 18.02.1994
(51) Int. Cl.: B23P 6/00, B23P 11/02, B23K 11/30

(54) **Refurbishment of seam welding wheels**

(30) Priority: 20.02.1993 GB 9303432
(71) Applicant: Neal, John Charles, Upton, Wirral (GB)
(72) Inventor: Neal, John Charles, Upton, Wirral (GB)
(74) Representative: Lyons, Andrew John

(57) **Abstract**

A seam welding wheel (10) is refurbished by forming an outer rim (18) to be fitted to the remaining inner ring (12). The outer rim has an inner diameter slightly smaller than the outer diameter of the inner ring. The outer rim is heated to expand it sufficiently to fit onto the inner ring. The heated outer rim is fitted onto the inner ring and allowed to cool so as to shrink onto the inner ring.

## Description

This invention concerns refurbishment of seam welding wheels.

Seam welding wheels for a seam welding process have a zirconium copper or chrome rim which wears down with use.

Once a certain amount of the rim has been used up, a wheel becomes unusable and so is replaced. The remaining core or inner ring is then disposed of as scrap. Welding wheels are expensive and disposing of the remainder as scrap represents a significant waste of money.

An object of this invention is, therefore, to provide a process for refurbishing seam welding wheels after use rather than disposing of them as scrap.

According to the invention it is proposed that a seam welding wheel inner ring have an outer rim of suitable material formed on the inner ring, whereby the welding wheel becomes reusable.

In a preferred process according to the invention a ring of seam welding wheel material is formed with an inner diameter slightly smaller than the outer diameter of the inner ring. The outer ring is heated so that it expands sufficiently to fit onto the inner ring, as a rim whereby cooling of the outer ring shrinks it onto the inner ring. The inner ring and the rim are then preferably welded together say using the electron beam technique. A full penetration electron beam weld is preferably made from one side only.

Before fitting the rim, the inner ring is preferably cleaned and machined to a desired diameter, typically to approximately 230mm. The rim is then preferably machined to give it approximately the same inner diameter as the outer diameter of the inner ring.

The outer rim will be heated to a temperature sufficient for the desired expansion thereof. Typically, the outer rim will be heated up to 40 to 50 degrees centigrade, especially about 45 degrees.

When the outer rim has been fitted onto the inner ring, the two parts are preferably clamped together while the outer rim cools, in order to ensure accurate positioning of the outer rim on the inner ring.

Once the outer rim has been fitted to the inner ring and the two parts welded together, if desired, the completed wheel may be machined conveniently on a lathe according to customers instructions and requirements.

It is possible to carry out a surface treatment of a refurbished and welding wheel for stress relieving and to produce a cosmetic finish. A suitable surface treatment comprises the step of blasting the wheel with blastbeads under air pressure.

The outer rim used for refurbishing seam welding wheels is preferably made of a copper alloy, especially a chrome copper alloy or a zirconium chrome copper alloy. The amount of chromium present in the alloy is preferably chosen to impart hard wearing properties without impairing conductivity unduly. The amount of chromium present in the alloy is preferably in the range of 0.5 to 1% by weight. The outer rim material preferably has one or more of the following properties:
1. Complies with BS 4577 - A2/2 and/or A2/1
2. Conductivity at least 75%, preferably about 80% IACS
3. Hardness 125 to 137 (Vickers)

A typical chemical analysis for a preferred outer rim material, particularly suitable for general seam welding, is as follows in percentage by weight:

| | |
|---|---|
| Cr 0.75 | Sn 0.01 |
| P 0.01 | Ni 0.01 |
| Mg 0.05 | Bi 0.001 |
| Si 0.03 | Te 0.01 |
| Pb 0.01 | Cu balance |
| Fe 0.01 | |

Another typical chemical analysis for a preferred outer rim material, particularly suitable for seam welding of radiators, is as follows in percentage by weight:

| | |
|---|---|
| Zr 0.10 | Sn 0.01 |
| Cr 0.75 | Ni 0.01 |
| P 0.01 | Bi 0.001 |
| Mg 0.05 | Te 0.01 |
| Si 0.03 | Cu balance |
| Pb 0.01 | |
| Fe 0.01 | |

By refurbishing used up seam welding wheel according to the process of the invention it may be possible to produce considerable savings of materials and hence of expense.

This invention will now be further described, by way of example only, with reference to the accompanying drawings, in which:

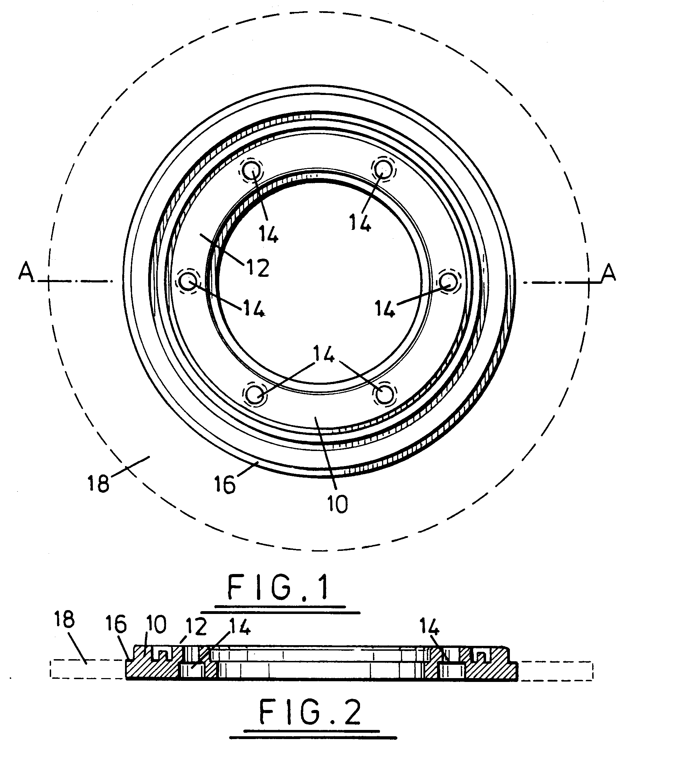

Figure 1 is a plan view of a seam welding wheel inner ring:
Figure 2 is a section on line A of Figure 1 with an outer rim fitted shown in shadow;
Figure 3 is a plan view of an outer rim used for refurbishing the inner ring of figure 1; and
Figure 4 is a side of view of the outer rim of Figure 1.

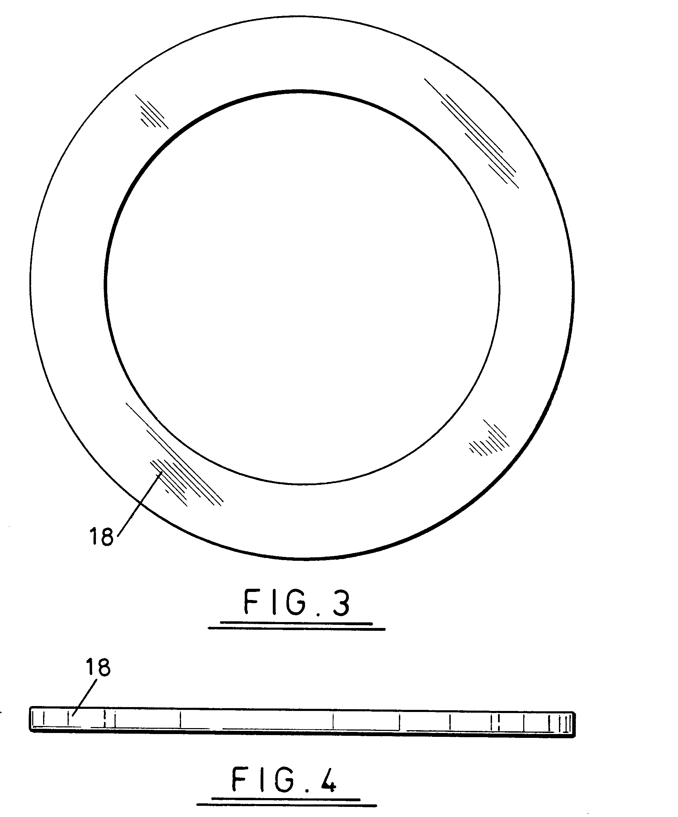

Referring to the accompanying drawings, a seam welding wheel inner ring 10, which remains after its rim has been worn down by use, has a main inner ring part 12, having holes 14 therethrough for bolts or the like for securing same to a seam welding machine, and a peripheral flange 16 which is the worn down remainder of the seam welding wheel rim. Figures 3 and 4 show a ring 18 of chrome copper or chrome zirconium copper prepared to replace the worn down rim of the inner ring.

To refurbish a seam welding wheel, a ring 18 is fitted to an inner ring 10 using the following sequence of steps:
(1) The inner ring is cleaned.
(2) The inner ring rim is machined to an outer diameter of 230mm.
(3) The outer ring is machined internally to suit the inner ring.
(4) The outer ring is heated to 45 degrees.
(5) The outer ring is fitted to the inner ring and the two clamped together. The outer ring is allowed to cool to produce a shrink fit onto the inner ring.
(6) The outer and inner rings are welded together using an electron beam technique, while still clamped together. A full penetration electron beam is made from one side only.
(7) The complete unit is machined on a lathe to customer's instructions and requirements.
(8) A final surface treatment is carried out using blastbeads under air pressure for stress-relieving and a cosmetic finish.

## Claims

1. A process for refurbishing a seam welding wheel comprising the steps of forming an outer rim for the remaining inner ring which has an inner diameter slightly smaller than the outer diameter of the inner ring, heating the outer rim so that it expands sufficiently to fit onto the inner ring, fitting the heated outer rim onto the inner ring and cooling the outer rim to shrink onto the inner ring.

2. A process as claimed in claim 1, further comprising the step of welding the outer rim to the inner ring.

3. A process as claimed in claim 2, wherein the welding step is by electron beam welding.

4. A process as claimed in claim 2 or 3, wherein a full penetration electron beam weld is made from one side only of the wheel.

5. A process as claimed in any one of claims 1 to 4, further comprising preliminary steps of cleaning and machining the inner ring to a desired diameter.

6. A process as claimed in any one of claims 1 to 5, wherein the outer rim is heated upto 40 to 50°C.

7. A process as claimed in any one of claims 1 to 6, wherein the inner ring and outer rim are clamped together while the outer rim cools.

8. A process as claimed in any one of claims 1 to 7. further comprising the step of machining the completed wheel.

9. A process as claimed in any one of claims 1 to 8, further comprising a surface treatment step of the completed wheel.

10. A process as claimed in claim 9, wherein the surface treatment comprises the step of blasting the wheel with blastbeads under pressure.

11. A process as claimed in any one of claims 1 to 10, wherein the outer rim is of copper alloy.

12. A process as claimed in claim 11, wherein the copper alloy is a chrome copper alloy or a zirconium chrome copper alloy.

13. A process as claimed in claim 11, wherein the amount of chromium present in the alloy is in the range of 0.5 to 1% by weight.

14. A seam welding wheel whenever refurbished by a process as claimed in any one of claims 1 to 13.
